# FASCICULE DE BREVET EUROPEEN

(11) **EP 3 044 569 B1**
(45) Date de publication et mention de la délivrance du brevet: **30.06.2021**
(21) Numéro de dépôt: 14761898.7
(22) Date de dépôt: 11.09.2014
(51) Int. Cl.: G01N 21/64

(54) **PROCÉDÉ FLUORIMÉTRIQUE SIMPLIFIÉ POUR ÉVALUER L'INFLUENCE D'UNE CONDITION SUR UN ÉCHANTILLON BIOLOGIQUE ET SES APPLICATIONS**
VEREINFACHTES FLUORIMETRISCHES VERFAHREN ZUR BEURTEILUNG DES EINFLUSSES EINER BEDINGUNG AUF EINE BIOLOGISCHE PROBE UND ANWENDUNGEN DAVON
SIMPLIFIED FLUORIMETRIC METHOD FOR ASSESSING THE INFLUENCE OF A CONDITION ON A BIOLOGICAL SAMPLE AND APPLICATIONS OF SAME

(30) Priorité: 12.09.2013 FR 1358767
(43) Date de publication de la demande: 20.07.2016
(73) Titulaire: Luxor, 31000 Toulouse (FR)
(72) Inventeur: FURGER, Christophe, F-31000 Toulouse (FR); DERICK, Sylvain, F-31120 Portet Sur Garonne (FR)
(74) Mandataire: Brevalex
(86) Numéro de dépôt international: PCT/EP2014/069440
(87) Numéro de publication internationale: WO 2015/036506

(56) Documents cités:
- EP-A1- 1 998 166
- WO-A1-2009/087229
- WO-A2-00/23615
- DE-A1- 10 308 814
- US-A1- 2005 048 539
- None

## Description

### DOMAINE TECHNIQUE

La présente invention appartient au domaine technique des dosages fluorimétriques appliqués à la biologie et, plus particulièrement, à la biologie cellulaire.

La présente invention concerne un procédé fluorimétrique pour évaluer l'influence d'une condition expérimentale et/ou environnementale sur un échantillon biologique et propose des applications dans le domaine du diagnostic *in vitro,* dans le domaine du criblage de composés présentant un potentiel élevé d'un point de vue thérapeutique et dans le domaine du contrôle qualité.

### ÉTAT DE LA TECHNIQUE ANTÉRIEURE

La détection de la toxicité cellulaire fait l'objet de nombreuses applications notamment dans les domaines de la cancérologie et de la toxicologie. La mesure de la toxicité cellulaire est généralement basée sur l'observation et l'analyse d'événements majeurs en particulier les modifications dans le fonctionnement de la mitochondrie, dans l'organisation et la perméabilité de la membrane plasmique, ou encore de la structure de l'ADN.

Différentes technologies basées sur des techniques de fluorescence, de luminescence ou de colorimétrie ont été développées qui visent en général la détection de l'une de ces étapes majeures.

La détection de la modification de l'organisation de la membrane plasmique est traitée par exemple par la méthode « annexine » qui exploite la capacité de l'annexine de se lier à des phosphatidyl sérines qui se présentent sur la surface externe de la membrane plasmique à l'approche de la mort cellulaire (« Annexin V affinity assay : a review on an apoptosis détection system based on phosphatidylserine exposure », Van Engelans et al, Cytometry, 31 :1-9, 1998).

D'autres technologies mesurent l'activité métabolique de la cellule qui est diminuée dans le cadre d'un effet de toxicité cellulaire. On peut citer, parmi ces techniques, le MTT (mesure colorimétrique de l'activité mitochondriale) ou encore le procédé ATPlite (test luminescent de production d'ATP).

D'autres méthodes ciblent les remaniements et fragmentations de l'ADN au cours du processus de toxicité cellulaire. Ces méthodes ont l'avantage de mesurer l'influence d'un effet toxique sur l'état de l'ADN, élément fondamental de la vie cellulaire. On peut notamment citer le test des comètes (« A simple technique for quantitation of low levels of DNA damage in individual cells », Singh et al, Experimental Cell Research, 175 : 184-191, 1988) et le test des micronoyaux (« The production of micronuclei from chromosome aberrations in irradiated cultures of human lymphocytes », Countryman et Heddle, Mutation Research, 41 : 321-32, 1976) qui constituent les tests de référence de mesure d'altération d'ADN.

Les méthodes ci-dessus restent toutefois très chères, peu maniables, souvent peu reproductibles et non adaptées aux problématiques actuelles de haut débit.

La demande internationale WO 2009/087229 au nom de Novaleads, publiée le 16 juillet 2009 propose déjà une solution aux problèmes techniques présentés ci-dessus. En effet, cette dernière propose un procédé fluorimétrique pour évaluer *in vitro* l'influence d'une condition sur un échantillon biologique. Ce procédé présente de nombreux avantages comme le fait qu'il puisse utiliser des cellules en suspension ou adhérentes, qu'il soit quantifiable, reproductible et qu'il soit compatible avec le criblage haut débit. Le procédé décrit dans la demande internationale WO 2009/087229 nécessite toutefois l'illumination en continu du composé fluorescent mis en œuvre. Une telle condition impliquant l'utilisation d'un matériel dédié d'illumination de l'échantillon qui constitue une contrainte notamment pour les applications de criblage à haut débit.

Il existe donc un réel besoin d'avoir des méthodes plus faciles à mettre en œuvre et ce pour détecter des effets génotoxiques, cytotoxiques, nécrotiques ou apoptogènes (applications en mesure de toxicité cellulaire) et/ou identifier des composés capables de moduler ces effets (applications en criblage moléculaire). Ce besoin est réel dans le cadre règlementaire (directives européennes REACH et cosmétique, notamment) et des campagnes de criblages à haut débit effectuées par les industriels pharmaceutiques qui nécessitent la mise en œuvre de tests simples, robustes, bon marché et pouvant se substituer aux essais animaux.

### EXPOSÉ DE L'INVENTION

La présente invention permet d'apporter une solution aux problèmes techniques ci-dessus puisqu'elle décrit un procédé fluorimétrique simplifié permettant de caractériser l'influence d'une condition environnementale et/ou expérimentale sur un échantillon biologique mis en contact avec un composé fluorescent et ce, sans nécessiter l'illumination en continu de ce composé fluorescent.

En effet, grâce à leurs travaux, les inventeurs ont démontré qu'il est possible de caractériser au moins deux états de toxicité cellulaire par simple traitement d'un échantillon biologique, tel que des cellules en culture, avec une solution de composé (ou marqueur) fluorescent. La présente invention repose sur une cinétique de profil de fluorescence variable lorsque la solution est appliquée sur des cellules viables ou sur des cellules traitées avec un agent cytotoxique. De façon surprenante vis-à-vis de l'enseignement de la demande internationale WO 2009/087229, cette variabilité dans le profil cinétique de la fluorescence existe sans illumination du composé fluorescent.

En outre, les inventeurs ont également démontré que l'ajout de composés chimiques de nature variable dans la solution de composé (ou marqueur) fluorescent permet d'accélérer la caractérisation des deux états de toxicité cellulaire.

De plus, la présente invention est remarquable car, à partir de résultats obtenus sur des études liées à la toxicité cellulaire, elle est généralisable à de nombreux processus biologiques dans lesquels on peut tirer partie de l'évolution du profil cinétique de fluorescence d'un échantillon marqué avec un composé fluorescent, les différents profils cinétiques obtenus à partir de différentes conditions expérimentales traduisant différents états de l'échantillon et ce, sans que l'échantillon ne soit maintenu sous illumination. Les processus biologiques susceptibles d'être étudiés par le procédé de l'invention doivent présenter deux états extrêmes ci-après désignés état 1 et état 2.

Dans un état 1, l'échantillon n'a pas été soumis à un traitement toxique capable d'induire une altération des acides nucléiques qu'il contient et, en particulier, de l'ADN.

Dans un état 2, l'échantillon a été soumis à un traitement toxique ayant abouti à une altération des acides nucléiques et, en particulier, de l'ADN présents au moment de la mesure.

Ainsi, parmi les processus biologiques pouvant avantageusement être étudiés via le procédé de l'invention, on peut citer les processus biologiques impliquant :
- des variations dans l'état de la structure des acides nucléiques et, en particulier, de l'ADN telles qu'une réorganisation, une dégradation ou une segmentation ;
- des variations dans la nature, la localisation et/ou la concentration d'éléments cellulaires comportant des acides nucléiques tels que le noyau, les nucléoles, les chromosomes, les ribosomes, le réticulum endoplasmique, les mitochondries, le cytosol, les ARN (messagers, ribosomiques, de transfert, d'interférence...).

Le procédé de l'invention présente plusieurs intérêts majeurs :
- il fonctionne indifféremment sur des cellules en culture adhérentes ou en suspension,
- le résultat est quantifiable (établissement de relations dose-réponse) : le résultat est obtenu sous forme de variation de l'intensité de fluorescence, un paramètre indépendant du nombre de cellules présentes dans l'échantillon, ce nombre pouvant beaucoup varier selon l'état de toxicité de l'échantillon ;
- le protocole expérimental mis en œuvre est extrêmement simple : il ne nécessite que l'ajout de la molécule fluorescente dans le milieu de culture ; et
- la méthode met en œuvre avantageusement des composés fluorescents peu onéreux rendant le coût du test bon marché.

La présente invention est telle que définie dans le jeu de revendications annexé.

Elle concerne donc un procédé pour déterminer l'influence d'une condition sur un échantillon biologique comprenant les étapes consistant à :
-) mettre ledit échantillon préalablement soumis à ladite condition en contact avec une solution comprenant au moins un composé fluorescent ;
-) mesurer la fluorescence émise par ledit composé fluorescent suite à ladite étape précédente, ledit procédé étant réalisé sans illumination continue du composé fluorescent.

Dans la demande internationale WO 2009/087229, l'illumination continue du composé fluorescent a été définie comme une excitation à la longueur d'onde adéquate durant une durée longue, comprise entre 1 et 1000 secondes. Comme le procédé selon la présente invention ne comprend pas une telle étape d'illumination continue, le composé fluorescent mis en œuvre est excité, en vue de la mesure de la fluorescence émise lors de l'étape (b), pendant une durée inférieure à la durée d'illumination décrite dans la demande internationale WO 2009/087229. En d'autres termes, dans le cadre de la présente invention, chaque durée d'excitation dudit composé fluorescent est inférieure à 1 seconde, notamment inférieure à 900 ms, en particulier, inférieure à 800 ms et, tout particulièrement, inférieure à 700 ms. Par conséquent, l'excitation du composé fluorescent au temps t₁, l'excitation du composé fluorescent au temps t₂ et toute autre excitation éventuelle du composé fluorescent durant le procédé selon la présente invention présentent une durée inférieure à 1 seconde, notamment inférieure à 900 ms, en particulier, inférieure à 800 ms et, tout particulièrement, inférieure à 700 ms.

Avantageusement, l'échantillon biologique mis en œuvre dans le cadre de la présente invention est choisi dans le groupe constitué par une cellule, plusieurs cellules, une partie de cellule, une préparation cellulaire, des acides nucléiques isolés et leurs mélanges.

Dans le cadre de la présente invention, on entend par « cellule », aussi bien une cellule de type procaryote que de type eucaryote. Parmi les cellules eucaryotes, la cellule peut être une levure telle qu'une levure du genre *Saccharomyces* ou *Candida,* une cellule végétale ou une cellule animale telle qu'une cellule de mammifères, de poissons ou d'insectes. Les cellules de mammifères peuvent notamment être des cellules tumorales, des lignées cellulaires immortalisées, des cellules somatiques ou germinales ou des cellules souches. Il peut s'agir de manière non exclusive de globules rouges, d'ostéoblastes, de cellules neuronales, d'hépatocytes, de cellules musculaires, des lymphocytes ou de cellules progénitrices. Les cellules de type procaryote sont des bactéries qui peuvent être de type gram positif ou de type gram négatif, ou des archées. Parmi ces bactéries, on peut citer, à titre d'exemple et de façon non-exhaustive, les bactéries appartenant aux embranchements des spirochètes et des chlamydiae, les bactéries appartenant aux familles des entérobactéries (telles que *Escherichia coli*), des streptococcacées (telles que *Streptococcus*), des microccacées (telles que *Staphylococcus*), des légionelles, des mycobactéries, des bacillacées, des cyanobactéries et autres. Parmi les archées, on peut citer, à titre d'exemples et de façon non-exhaustive, les archées appartenant aux phyla des Crenarchaeotes (telles que *Sulfolobus*) et Euryarchaeotes (telles que *Thermococcus*).

Les cellules mises en œuvre dans le cadre de la présente invention peuvent être obtenues à partir d'une culture cellulaire primaire ou d'une culture d'une lignée cellulaire ou à partir d'un échantillon d'un fluide tel que de l'eau ou un fluide biologique préalablement extrait d'un corps humain ou animal, ledit échantillon pouvant avoir subi différents traitements préalables comme une centrifugation, une concentration, une dilution ....

Par « partie de cellule », on entend dans le cadre de la présente invention notamment les différents organites et sous-compartiments cellulaires contenant ou susceptible de contenir des acides nucléiques comme, par exemple, le noyau, le nucléole, les chromosomes, les ribosomes, le cytosol, le réticulum endoplasmique, les mitochondries et les chloroplastes...

Par « préparation cellulaire », on entend dans le cadre de la présente invention aussi bien un extrait cellulaire qu'une préparation enrichie en organites cellulaires tels que précisés ci-dessus. Parmi les extraits cellulaires préférés, on peut citer les acides nucléiques et notamment l'ADN cellulaire.

Les parties de cellules et préparations cellulaires mises en œuvre dans le cadre de la présente invention peuvent être obtenues à partir de cellules issues d'une culture cellulaire ou d'un échantillon tels que précédemment définis. L'homme du métier connaît différentes techniques permettant d'obtenir, à partir de cellules ou de cultures cellulaires, des organites cellulaires, des parties d'organites cellulaires, des fractions riches en organites cellulaires, des extraits et préparations cellulaires impliquant des techniques telles que la technique de partage de phase ou des étapes telles que des étapes de centrifugation.

Avantageusement, le procédé selon la présente invention est mis en œuvre en utilisant, comme échantillon biologique, une (ou plusieurs) cellule(s) viable(s) telle(s) que précédemment définie(s) en culture ou en suspension.

Par « composé fluorescent », on entend, dans le cadre de la présente invention un composé qui, lorsque il est excité à une longueur d'onde caractéristique appelée longueur d'onde d'excitation, absorbe un photon dans cette gamme d'excitation et retourne à son état fondamental en restituant un photon émis à une longueur d'onde également caractéristique appelée longueur d'onde d'émission.

N'importe quel composé fluorescent connu par l'homme du métier est utilisable dans le cadre de la présente invention. Le composé fluorescent mis en œuvre dans le cadre de la présente invention peut présenter un recouvrement spectral favorable entre les spectres d'excitation et d'émission ou encore ne pas présenter un tel recouvrement.

Dans une variante préférée de l'invention, le composé fluorescent mis en œuvre est un composé fluorescent spécifique des acides nucléiques. En d'autres termes, le composé fluorescent mis en œuvre est capable de se lier aux acides nucléiques. Par « acide nucléique », on entend un acide désoxyribonucléique (ADN) simple brin ou double brin, un acide ribonucléique (ARN) tel qu'un ARN messager, ribosomique, de transfert ou d'interférence.

Les composés fluorescents spécifiques des acides nucléiques sont, notamment, choisis parmi les intercalants fluorescents, les colorants liant les bases A:T ou les bases G:C et les cyanines perméantes ou imperméantes. Plus particulièrement, lesdits composés fluorescents sont choisis dans le groupe constitué par le bromure d'éthidium, le thiazole orange, le pyridium benzothiazole orange, l'oxazole yellow, le thiazole pyridine, le thiazole blue et leurs dérivés, la thioflavine S, la thioflavine T, la thioflavine TCN®, le diéthylquinolythocyanine iodide (DEQTC), le TOTO-I®, le TO-PRO-1®, ou encore le YOYO-1®, l'Hoechst® 33258, l'Hoechst® 33342, l'Hoechst® 34580, le diamidino phénylindole (DAPI), l'iodure de propidium, la pyronine Y, la 7-aminoactinomycine D (7 AAD), l'acridine orange, rauramine O, la calcéine, le New Méthylène Blue, l'olamin-O, l'Oxazine 750, le bleu astra, le BENA 435 (demande internationale WO 2007/096728), le Draq5®, le SYTOX® Green, la série des SYTO® comprenant notamment le SYTO 11®, le SYTO 12®, le SYTO 13®, le SYTO 15®, le SYTO 16®, le SYTO 18®, le SYTO 62®, le SYTO 80® ou le SYTO 81®.

Dans le cadre de la présente invention, la fixation du composé fluorescent audit échantillon biologique peut être directe. Cet aspect de l'invention est notamment celui décrit dans la partie expérimentale ci-après où le composé fluorescent testé i.e. le thiazole orange se fixe directement à l'ADN contenu dans l'échantillon biologique.

Dans une variante de la présente invention, la fixation du composé fluorescent audit échantillon biologique peut être indirecte. Dans cette variante, le composé fluorescent ne se fixe audit échantillon biologique que par l'intermédiaire d'un agent de fixation. Par « agent de fixation », on entend, dans le cadre de la présente invention, un composé capable de se fixer audit échantillon biologique et auquel est fixé, de façon directe ou indirecte, le composé fluorescent. Avantageusement, l'agent de fixation est choisi dans le groupe constitué par un peptide, une protéine, un anticorps, un agoniste ou antagoniste de récepteurs membranaires ou nucléaires, une hormone, un acide nucléique, etc... Le composé fluorescent peut être fixé de façon directe audit agent de fixation et notamment par l'intermédiaire d'une liaison covalente. En variante, cette fixation peut être indirecte via un bras de liaison susceptible de lier le composé fluorescent audit agent de liaison. L'homme du métier connaît différents types d'agents de liaison et saura, en fonction du composé fluorescent et de l'agent de liaison mis en œuvre, choisir l'agent de liaison le mieux approprié. De même, l'homme du métier connaît différentes techniques permettant de préparer des agents de liaison portant, de façon directe ou indirecte, un composé fluorescent. Ces techniques appartiennent notamment au domaine du génie génétique et à celui de la synthèse chimique.

Le procédé de la présente invention est remarquable de par le fait qu'il ne nécessite pas l'utilisation d'un membre donneur de fluorescence et d'un membre accepteur de fluorescence différent comme dans les couples de partenaires de FRET. Ainsi, le procédé de la présente invention ne met en œuvre avantageusement qu'un seul type de composé fluorescent. Plusieurs molécules d'un même composé fluorescent sont utilisables dans le procédé selon l'invention et non plusieurs molécules d'au moins deux composés fluorescents différents comme dans la technique de FRET.

Par « condition », on entend dans le cadre de la présente invention aussi bien une condition environnementale ou expérimentale, physique ou chimique, capable d'engendrer des modifications au sein de l'échantillon biologique. Avantageusement, la condition dont on cherche à déterminer l'influence sur un échantillon biologique est une condition physique, chimique ou biologique.

Par « condition physique », on entend une condition physique qui modifie l'environnement dans lequel se trouve l'échantillon biologique telle qu'une condition thermique (modification de la température dudit environnement), une condition électrique (environnement et donc échantillon biologique soumis à une stimulation électrique), une condition électromagnétique (environnement et donc échantillon soumis à une onde électromagnétique et notamment une onde d'ultra hautes fréquences (onde UHF)), une condition mécanique ou une condition radioactive.

Par « condition chimique » on entend une condition chimique qui modifie l'environnement dans lequel se trouve l'échantillon biologique telle que l'adjonction d'un composé à tester dans l'environnement et/ou la modification de sa concentration, la modification de la nature et/ou de la concentration des ions contenus dans ledit environnement.

Par « condition biologique », on entend une condition de nature biologique qui modifie l'environnement dans lequel se trouve l'échantillon biologique telle que la présence de bactéries, archées, parasites, champignons, levures ou virus.

L'étape (a) du procédé selon la présente invention consiste à mettre l'échantillon biologique préalablement soumis à ladite condition en contact avec une solution comprenant au moins un composé fluorescent, ledit échantillon, ladite condition et ledit composé fluorescent étant tels que précédemment définis. Ainsi, dans le cadre de la présente invention, l'échantillon biologique est soumis à la condition, avant que le composé fluorescent ne soit fixé sur l'échantillon.

En d'autres termes, l'étape (a) du procédé selon la présente invention comprend les sous-étapes successives consistant à :
i) soumettre ledit échantillon biologique à ladite condition puis
ii) mettre ledit composé fluorescent en contact avec ledit échantillon.

Les étapes (i) et (ii) du procédé selon l'invention sont des étapes de routine pour l'homme du métier qui saura les mettre en œuvre de façon adéquate en tenant compte du type d'échantillon biologique, du type de condition et du type de composé fluorescent utilisés.

A cet effet, le procédé de la présente invention peut nécessiter une étape supplémentaire de perméabilisation. Cette étape supplémentaire peut être obligatoire lorsque le composé fluorescent ne peut, de par sa nature, aller se fixer sur ledit échantillon biologique en l'absence de toute perméabilisation. Toute technique de perméabilisation connue de l'homme du métier est utilisable dans le cadre de la présente invention. Avantageusement, cette étape de perméabilisation peut nécessiter l'emploi de détergents tels que le Triton X100, le sodium dodecylsulfate (SDS) ou un Tween®.

Le procédé de la présente invention peut nécessiter une étape supplémentaire de fixation de l'échantillon biologique. Toute technique de fixation d'échantillon biologique et notamment de cellules connue de l'homme du métier est utilisable dans le cadre de la présente invention comme une fixation dans de l'éthanol, du méthanol, du paraformaldéhyde ou du glutaraldéhyde.

Avantageusement, l'étape (i) est réalisée entre 1 et 96 h, notamment entre 2 et 72 h et, en particulier entre 3 et 48 h, avant l'étape (ii). De plus, si des étapes supplémentaires de type perméabilisation ou fixation sont nécessaires, ces dernières sont effectuées entre l'étape (i) et l'étape (ii) et avantageusement encore, ces étapes supplémentaires sont réalisées moins d'1 h, notamment moins de 30 min avant l'étape (ii) de façon à ne pas devenir une condition influençant l'échantillon biologique.

L'étape (b) du procédé selon la présente invention consiste à mesurer la fluorescence émise par ledit composé fluorescent à au moins deux temps distincts, t₁ et t₂ suite à ladite étape (a). L'étape (b) est réalisée en absence d'une quelconque illumination continue du composé fluorescent i.e. l'échantillon biologique sur lequel est fixé le composé fluorescent n'est soumis à aucune illumination continue durant cette étape (b) et durant tout le procédé de la présente invention.

Tout instrument connu de l'homme du métier dans le domaine de la fluorescence est utilisable lors de la mesure de la fluorescence émise de l'étape (b). A titre d'exemples non limitatifs, on peut citer les lecteurs de fluorescence commerciaux adaptés aux standards de culture cellulaire (plaques 6, 12, 24, 48, 96, 384 et 1536 puits), les instruments de criblage à haut contenu informatif (HCS), les cytomètres de flux et les microscopes à fluorescence équipés notamment de systèmes d'acquisition d'images.

Deux formes de mise en œuvre principales sont envisageables pour cette étape (b).

Dans une 1^{re} forme de mise en œuvre, une étape (b₁) consiste à établir le profil cinétique de la fluorescence émise par ledit composé fluorescent en mesurant la fluorescence émise par ledit composé fluorescent à une pluralité de temps distincts.

Par « pluralité de temps distincts », on entend plus de 2, notamment plus de 5, en particulier, plus de 10 et, plus particulièrement, plus de 25 temps distincts. Ces différents temps peuvent être choisis à intervalles réguliers ou à intervalles irréguliers. Avantageusement, les mesures sont effectuées à des intervalles réguliers compris entre 1 s et 3 min et notamment entre 10 s et 2 min. A titre d'exemples particuliers de cet intervalle, on peut citer un intervalle de 15 s, un intervalle de 30 s ou un intervalle de 1 min.

Le profil cinétique obtenu permet d'apprécier l'influence sur un échantillon biologique de la condition à laquelle ce dernier est soumis.

En effet, lorsque la condition expérimentale à laquelle est soumise l'échantillon biologique n'affecte, ni n'influence l'échantillon biologique, le profil cinétique obtenu présente un profil biphasique de type sigmoïdal composé d'une phase de latence suivie d'une forte augmentation et enfin d'une stabilisation du niveau de fluorescence. Cette forte augmentation pourrait s'expliquer par une augmentation du nombre de sites, une augmentation du rendement quantique ou une levée de quenching (inhibition de fluorescence) du composé fluorescent, résultant de la toxicité propre dudit composé fluorescent sur l'échantillon biologique.

Au contraire, si la condition expérimentale affecte ou influence l'échantillon biologique, le profil cinétique obtenu est monophasique de type hyperbolique, avec une forte augmentation de fluorescence non précédée de la phase de latence décrite précédemment suivie d'une phase de stabilisation. Ceci pourrait s'expliquer par le fait que la condition expérimentale a exercé, préalablement à l'ajout du composé fluorescent, une toxicité maximale rendant inefficace tout effet toxique supplémentaire lié à l'ajout du composé fluorescent tel qu'observé précédemment.

Ainsi, le procédé de l'invention peut permettre de distinguer deux états cellulaires correspondant à deux états dans la structure des acides nucléiques et, en particulier, de l'ADN. Par exemple, l'invention peut être appliquée au traitement avec un inducteur de type génotoxique, cytotoxique, apoptotique ou nécrotique, composé connu pour modifier ou altérer la structure de l'ADN (réorganisation, dégradation et segmentation).

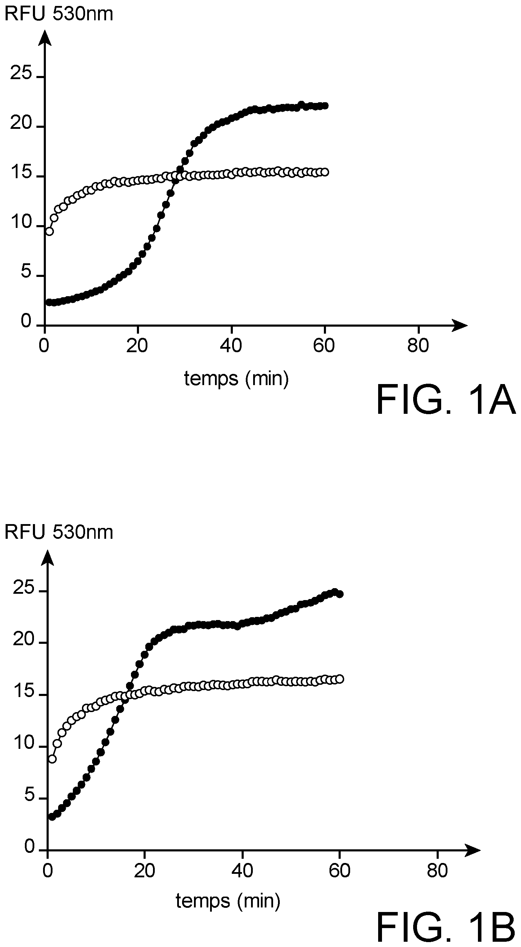

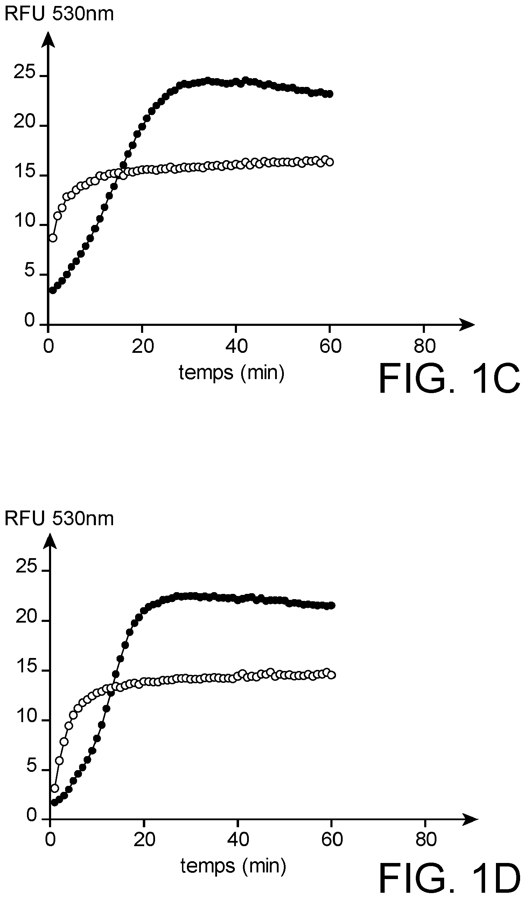

L'état 1 correspond alors à des cellules non traitées ou non sensibles à l'inducteur. Lorsque l'échantillon est marqué avec le composé fluorescent, on observe alors une augmentation de la fluorescence selon un profil biphasique (voir Figure 1 ; condition ●). L'état 2 correspond notamment à des cellules dont les acides nucléiques et, en particulier, l'ADN sont dégradés consécutivement au traitement avec l'inducteur. Lorsque l'échantillon est marqué avec le composé fluorescent, on observe une augmentation de la fluorescence selon un profil monophasique (voir Figure 1 ; condition O).

Grace à des profils cinétiques distincts il est ainsi possible de caractériser les deux états de toxicité par calcul, dans un intervalle de temps optimal, du ratio de fluorescence dans chacune des conditions expérimentales testées. Ce ratio sera largement supérieur à 1 (variation importante de l'intensité de fluorescence) dans le cas d'un échantillon non soumis à un inducteur de toxicité et proche de 1 (faible variation de l'intensité de fluorescence) dans le cas d'un échantillon soumis à un inducteur de toxicité (voir, à cet effet, le paragraphe II.2 de la partie expérimentale ci-après).

Il peut toutefois être nécessaire de comparer le profil cinétique obtenu à l'étape (b₁) avec un profil cinétique de référence dans lequel l'état de l'échantillon biologique est parfaitement défini. Ainsi, le procédé de l'invention peut comprendre une étape (c) supplémentaire et facultative consistant à comparer le profil cinétique obtenu à l'étape (b₁) avec un profil cinétique de référence.

A titre d'exemple et dans le cas d'un composé fluorescent se fixant sur l'ADN double-brin, un profil cinétique de référence pourra être :
- soit le profil cinétique obtenu lorsque l'échantillon biologique est mis en présence d'un composé tel qu'un agent toxique dans des conditions telles que la majorité voire la totalité des acides nucléiques et, en particulier, de l'ADN contenus dans l'échantillon a été dégradée, réorganisée et/ou segmentée (profil monophasique tel que précédemment défini),
- soit le profil cinétique obtenu lorsque l'échantillon biologique ne subit aucun traitement ou stimulation pouvant entraîner une quelconque dégradation, réorganisation ou segmentation des acides nucléiques et, en particulier, de l'ADN (profil biphasique tel que précédemment défini).

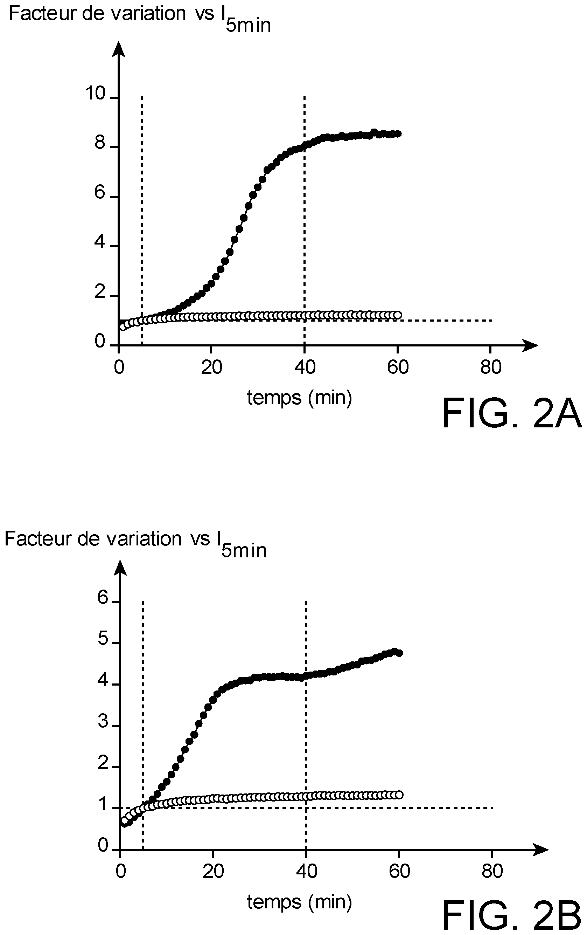

Dans cette forme de mise en œuvre, les valeurs de fluorescence émise mesurées peuvent être exprimées par rapport à la valeur de fluorescence obtenue à un temps de référence, cette dernière servant donc de valeur de référence. Avantageusement, le temps de référence est choisi durant la phase de latence du profil biphasique obtenu pour un échantillon biologique de même nature mis en contact avec le même composé fluorescent dans des conditions identiques comme, par exemple, les conditions de culture et la quantité de composé fluorescent, mais sans soumettre ledit échantillon à la condition testée ou à une quelconque autre condition pouvant affecter le profil cinétique de fluorescence. A titre d'exemple, dans le cadre des travaux présentés ci-après, le temps de référence a été établi à t = 5 min (Figure 2A). Il convient de remarquer que le fait d'exprimer les valeurs mesurées par rapport à une valeur de référence permet de s'affranchir de problèmes liés à la taille de l'échantillon biologique mis en œuvre. A titre d'exemple, on peut citer, notamment dans le cas où l'échantillon biologique est une culture cellulaire adhérente ou en suspension, les problèmes liés au nombre de cellules contenues dans ledit échantillon. En effet, avec le mode de calcul précédemment décrit, le profil cinétique mesuré pour un échantillon sera rigoureusement identique quel que soit le nombre de cellules présentes dans l'échantillon. Il sera ainsi possible de comparer des résultats obtenus sur des échantillons de taille (de nombre de cellules) variable.

En variante encore de cette forme de mise en œuvre, les valeurs de fluorescence émise mesurées peuvent être utilisées pour définir la constante de temps [*t*_{*1*/*2*}] d'augmentation de la fluorescence qui représente, pour une phase donnée, le temps nécessaire à la fluorescence pour atteindre 50% de sa valeur maximale. A titre d'exemple fondé sur les travaux présentés ci-après utilisant du thiazole orange comme composé fluorescent se fixant sur l'ADN, une constante de temps [*t*_{*1*/*2*}] inférieure à 6 min, notamment inférieure à 5 min observée pour un échantillon biologique soumis à une condition donnée permet de conclure que ladite condition affecte ledit échantillon et voire est cytotoxique si ledit échantillon est une cellule ou une culture cellulaire. Au contraire, si la constante de temps [*t*_{*1*/*2*}] est supérieure à 8 min, notamment supérieure à 10 min, la condition testée n'a aucune influence sur ledit échantillon. Comme précédemment envisagé, il peut également être souhaitable de préalablement définir les constantes de temps [*t*_{*1*/*2*}] obtenues pour un (ou plusieurs) profil(s) cinétique(s) de référence.

Le procédé selon la présente invention prévoit une 2^{de} forme de mise en œuvre de l'étape (b), étant étape (b₂), durant laquelle la fluorescence émise par le composé fluorescent n'est mesurée qu'aux deux temps distincts, t₁ et t₂. Cette forme de mise en œuvre présente un intérêt particulier dans le cadre de l'analyse de nombreux échantillons dans le contrôle qualité ou dans le cadre des criblages à haut débit effectués par les industriels pharmaceutiques.

En effet, la comparaison de la fluorescence mesurée à deux temps donnés est utilisée pour déterminer l'influence de la condition testée sur l'échantillon biologique mis en œuvre.

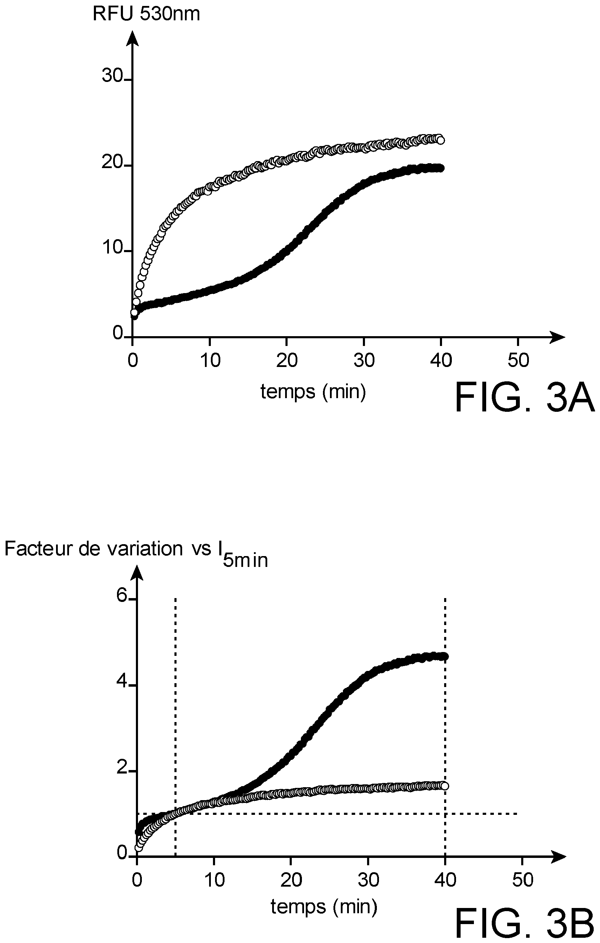

Pour cela, il convient de choisir le temps t₁ parmi les temps appartenant à la phase de latence de la fluorescence du profil cinétique biphasique de référence (échantillon biologique soumis aux mêmes conditions opératoires que le test mais en l'absence de la condition à tester) et le temps t₂ parmi les temps appartenant à la phase de stabilisation de la fluorescence du profil cinétique biphasique de référence. A titre d'exemple, dans le cadre des travaux présentés ci-après, le temps de référence t₁ a été établi à t = 5 min et le temps t₂ a été établi à t = 40 min (voir Figures 2A-D et 3B).

Par conséquent, dans cette 2^{de} forme de mise en œuvre, il est nécessaire de préalablement établir le profil cinétique de référence à savoir le profil cinétique de la fluorescence émise mesurée pour un même échantillon biologique mis en contact avec le même composé fluorescent mais en absence de ladite condition. A partir de ce profil cinétique, il est aisé d'obtenir et de choisir au moins un temps appartenant à la phase de latence de la fluorescence du profil cinétique biphasique de référence et au moins un temps appartenant à la phase de stabilisation de la fluorescence du profil cinétique biphasique de référence.

Ce profil cinétique de référence peut être obtenu par mesures expérimentales réalisées peu avant la mise en œuvre du procédé selon la présente invention (par exemple, le jour même) ou peut avoir été expérimentalement établi bien avant cette mise en œuvre (par exemple, un jour avant, une semaine avant, un mois avant ou encore un an avant).

La comparaison de la fluorescence émise aux temps t₁ et t₂ et notamment le facteur de variabilité de la fluorescence émise au temps t₂ (IFₜ₂) par rapport à la fluorescence émise au temps t₁ (IFₜ₁) i.e. le rapport IFₜ₂/IFₜ₁ permet de déterminer si la condition testée présente ou non une influence sur l'échantillon mis en œuvre.

A titre d'exemples et dans le cas d'un composé fluorescent se fixant sur l'ADN comme le thiazole orange, un rapport IFₜ₂/IFₜ₁ inférieur à 2, notamment de l'ordre de 1 (i.e. 1 ± 0,5, notamment 1 ± 0,2 et, en particulier, 1 ± 0,1), observé pour un échantillon biologique soumis à une condition donnée permet de conclure que ladite condition affecte ledit échantillon et voire est cytotoxique si ledit échantillon est une cellule ou une culture cellulaire. Au contraire, si le rapport IFₜ₂/IFₜ₁ est supérieur à 3, notamment supérieur à 4 et, en particulier, supérieur à 6, la condition testée n'a aucune influence sur ledit échantillon. Comme précédemment envisagé, il peut également être souhaitable de préalablement définir les rapports IFₜ₂/IFₜ₁ obtenus pour un (ou plusieurs) profil(s) cinétique(s) de référence, en fonction par exemple des lignées cellulaires utilisées dans l'échantillon.

Les inventeurs se sont également rendu compte qu'il était possible d'accélérer le procédé selon la présente invention en ajoutant à la solution contenant ledit composé fluorescent au moins un composé affectant, de façon rapide, l'intégrité de l'échantillon mis en œuvre et, en particulier, affectant directement ou indirectement l'intégrité des acides nucléiques contenus dans cet échantillon. Ce composé sera ensuite défini comme « composé accélérateur ». Clairement le composé accélérateur est différent du composé fluorescent. De façon surprenante, l'ajout d'un tel composé simultanément avec le composé fluorescent ne modifie en rien la présence des zones caractéristiques du profil cinétique biphasique (une phase de latence précédant l'augmentation rapide de la fluorescence puis une phase de stabilisation) de la fluorescence émise obtenu en l'absence du composé affectant l'intégrité de l'échantillon, mais réduit significativement la durée de la phase de latence du profil cinétique biphasique. Avantageusement la diminution du temps de latence induite par l'ajout d'un composé accélérateur permet ainsi une mise en œuvre plus rapide de l'invention (comparer la Figure 2A aux Figures 2B-D).

Outre l'accélération du procédé de l'invention, cette variante présente en outre l'intérêt de ne pas nécessiter d'étapes supplémentaires dans le procédé puisque le composé fluorescent et le composé accélérateur sont mis en contact simultanément avec l'échantillon biologique et ce avantageusement dans une même solution.

De façon alternative, le composé accélérateur peut être ajouté dans la solution contenant déjà le composé fluorescent et déjà mise en contact avec l'échantillon biologique. Avantageusement, dans cette variante, le temps t₁ tel que précédemment défini, i.e. un des deux temps auxquels la fluorescence émise par ledit composé fluorescent est mesurée, est choisi préalablement à l'ajout du composé accélérateur dans la solution contenant déjà le composé fluorescent.

Par « composé accélérateur », on entend tout composé capable d'induire des dommages irréversibles à cet échantillon. Un tel composé est avantageusement un composé connu pour affecter l'intégrité cellulaire et/ou membranaire. Ainsi, le composé affectant l'intégrité de l'échantillon est avantageusement choisi parmi les composés génotoxiques ; les composés cytotoxiques ; les composés apoptotiques ; les composés nécrotiques ; les composés oxydants ; les tensioactifs ; les agents dénaturants et les agents physiques.

Par « composé oxydant », on entend une molécule capable de générer une réaction d'oxydation et notamment capable de générer des espèces réactives oxygénées (ROS) ou azotées (RNS). Tout agent oxydant susceptible de former, au contact de l'échantillon, des ROS ou RNS est utilisable dans le cadre de la présente invention en tant que composé affectant l'intégrité de l'échantillon. A titre d'exemple de composé oxydant il est possible d'utiliser le peroxyde d'hydrogène, le peroxynitrite, la NO-synthase, la NADPH-oxydase, la xanthine oxydase, un composé de formule ROOR dans laquelle R représente un groupe alkyle comprenant de 1 à 15 atomes de carbone, un groupe acyle - COR' avec R' représentant un groupe alkyle comprenant de 1 à 15 atomes de carbone ou un groupe aroyle -COAr avec Ar représentant un groupe aromatique comprenant de 6 à 15 atomes de carbone, un flux d'ozone, de l'acide chlorhydrique (HCl), de l'acide sulfurique (H₂SO₄), de l'acide nitrique (HNO₃), de l'acide perchlorique (HClO₄), du permanganate de potassium (KMnO₄), du dichromate de potassium (K₂Cr₂0₇), du chlorate de potassium (KClO₃), du trioxyde de chrome (CrO₃) ou un de leurs mélanges.

Par « groupe alkyle comprenant de 1 à 15 atomes de carbone », on entend un groupe alkyle, linéaire, ramifié ou cyclique, éventuellement substitué, comprenant de 1 à 15 atomes de carbone, notamment de 1 à 10 atomes de carbone et, en particulier, de 2 à 6 atomes de carbone et éventuellement un hétéroatome tel que N, O, F, Cl, P, Si, Br ou S.

Par « groupe aromatique comprenant de 6 à 15 atomes de carbone », on entend, dans le cadre de la présente invention, un groupe aromatique ou hétéroaromatique, éventuellement substitué, constitué d'un ou plusieurs cycles aromatiques ou hétéroaromatiques comportant chacun de 3 à 10 atomes, le ou les hétéroatomes pouvant être N, O, P ou S.

Par « substitué », on entend, dans le cadre de la présente invention, un groupe alkyle ou aromatique, mono- ou poly-substitué, par un groupe alkyle, linéaire ou ramifié, comprenant de 1 à 4 atomes de carbone, par un groupe amine, par un groupe carboxylique et/ou par un groupe nitro.

Par « tensioactif », on entend une molécule comportant une partie lipophile (apolaire) et une partie hydrophile (polaire). Tout tensioactif apte à solubiliser les membranes cellulaires et les lipides membranaires est utilisable dans le cadre de la présente invention en tant que composé affectant l'intégrité de l'échantillon. Un tel tensioactif est choisi parmi les tensioactifs anioniques, les tensioactifs cationiques, les tensioactifs zwittérioniques, les tensioactifs amphotères et les tensioactifs non-ioniques.

A titre de tensioactifs anioniques, il est, par exemple, possible d'utiliser le paratoluènesulfonate de tetraéthylammonium, le dodécylsulfate de sodium (ou SDS), le laurylsarcosinate de sodium (ou sarcosyl), le palmitate de sodium, le stéarate de sodium, le myristate de sodium, le di(2-éthylhexyl) sulfosuccinate de sodium, le méthylbenzène sulfonate et l'éthylbenzène sulfonate.

A titre de tensioactifs cationiques, il est, par exemple, possible d'employer le chlorure tétrabutyl-ammonium, le chlorure tetradécyl-ammonium, le bromure de tetradécyl-triméthyl-ammonium (TTAB), le bromure de cétyl-triméthyl-ammonium (CTAB), le bromure d'octadecyl-triméthyl-ammonium, le bromure de hexadecyl-triméthyl-ammonium, les halogénures d'alkylpyridinium portant une chaîne aliphatique et les halogénures d'alkylammonium.

A titre de tensioactifs zwittérioniques, on peut citer le N,N diméthyl-dodécyl-ammoniumbutanate de sodium, le diméthyl-dodécyl-ammonium propanate de sodium et les acides aminés.

A titre de tensioactifs amphotères, il est possible d'utiliser le lauroamphodiacétate de disodium et les bétaïnes comme l'alkylamidopropylbétaïne ou la laurylhydroxysulfobétaïne.

A titre de tensioactifs non ioniques, il est possible d'utiliser dans le cadre de la présente invention les alcoxylates d'alkyles, d'alcools gras, d'amines grasses, d'acides gras, d'oxoalcools ou d'alkylphénols ; les éthoxylates d'alkyles, d'alcools gras, d'amines grasses, d'acides gras, d'oxoalcools ou d'alkylphénols ; les monoesters (monolaurate, monomyristate, monostéarate, monopalmitate, monooléate, etc), phospholipides et polyesters d'acides gras et du glycérol ; les amides gras polyglycérolés comportant en moyenne de 1 à 5 ; les esters d'acide gras du sorbitan oxyéthylénés comportant de 2 à 30 moles d'oxyde d'éthylène ; les monoesters (monolaurate, monomyristate, monostéarate, monopalmitate, monooléate, etc) et polyesters d'acides gras et du sorbitane, les monoesters de polyoxyéthylène sorbitane ; les polyols (tensioactifs dérivés de sucres) en particulier les alkylates de glucose ; les tensioactifs dérivant de glucoside (laurate de sorbitol) ou de polyols ; les alcanolamides et leurs mélanges.

Plus particulièrement, le (ou les) tensioactif(s) utilisé(s) comme agent affectant l'intégrité de l'échantillon est (sont) choisi(s) dans le groupe constitué par le polyéthylène glycol tert-octylphényl éther (ou Triton X-100®), le monolaurate de polyoxyéthylène sorbitane 20 (ou Tween 20®), le dodécylsulfate de sodium (ou SDS), le laurylsarcosinate de sodium (ou sarcosyl) et leurs mélanges.

Par « agent dénaturant », on entend un agent apte à dénaturer, précipiter et/ou modifier la solubilité des composés cellulaires et notamment des protéines. Un tel agent est notamment choisi dans le groupe constitué par un solvant organique, un composé susceptible de modifier le pH de l'échantillon, un composé organique acide, un sel chaotropique ou un de leurs mélanges.

A titre de solvant organique, il est possible d'utiliser de l'acétone, du chloroforme, un alcool tel que du méthanol, de l'éthanol ou un de leurs mélanges.

A titre de composé susceptible de modifier le pH de l'échantillon, il est possible d'utiliser de l'acide chlorhydrique, de l'acide perchlorique (PCA), de l'hydroxyde de sodium, de l'hydroxyde de potassium ou un de leurs mélanges.

A titre de composé organique acide, il est possible d'utiliser l'acide trichloroacétique (TCA), l'acide picrique, l'acide sulfosalicylique ou un de leurs mélanges.

A titre d'agent chaotropique, il est possible d'utiliser le chlorure de sodium (NaCl), le sulfate d'ammonium ((NH₄)₂SO₄), le perchlorate de sodium (NaClO₄), l'iodure de sodium (Nal), le chlorure de lithium (LiCl), le perchlorate de lithium (LiClO₄), le chlorure de baryum (BaCl₂), le chlorure de césium (CsCl₂), le chlorure de potassium (KCl), l'iodure de potassium (Kl), de l'urée (CO(NH₂)₂), un sel de guanidine tel que le thiocyanate de guanidine (GuSCN) ou un de leurs mélanges.

Par « agent physique » on entend des variations de pression atmosphérique et/ou osmotique, des variations de température positives ou négatives et les rayonnements ionisants.

Comme précédemment expliqué, la présente invention est basée sur l'existence de deux profils cinétiques de la fluorescence émise par le composé fluorescent soumis à une condition expérimentale. Ces deux profils sont caractéristiques avec (a) un profil biphasique de type sigmoïdal composé d'une phase de latence suivie d'une forte augmentation et enfin d'une stabilisation du niveau de fluorescence lorsque la condition expérimentale à laquelle est soumise l'échantillon biologique n'affecte, ni n'influence cet échantillon biologique et (β) un profil monophasique de type hyperbolique, avec une forte augmentation de fluorescence non précédée de la phase de latence décrite précédemment suivie d'une phase de stabilisation lorsque la condition expérimentale à laquelle est soumise l'échantillon biologique affecte ou influence cet échantillon biologique.

Dans la présente invention, les inventeurs proposent donc d'utiliser ces propriétés pour tester l'influence d'un composé sur un échantillon biologique soit en mesurant en deux temps distincts t₁ et t₂ la fluorescence d'un composé fluorescent mis en contact avec ledit échantillon préalablement soumis à ladite condition (mode de réalisation décrit ci-dessus), soit en comparant, à un temps donné T, la fluorescence d'un composé fluorescent mis en contact avec un échantillon préalablement soumis à ladite condition avec la fluorescence du même composé fluorescent mis en contact avec un échantillon identique non soumis à ladite condition. En effet, les profils cinétiques obtenus et notamment les profils cinétiques des Figures 1A à 1D montrent clairement que la fluorescence du composé fluorescent mis en contact avec un échantillon biologique soumis à une condition l'affectant ou l'influençant est supérieure à la fluorescence du même composé fluorescent mis en contact avec un échantillon identique non soumis à cette condition et ce, pour un temps T choisi dans la phase de latence du profil biphasique de type sigmoïdal.

Ce 3^{e} mode de réalisation est également réalisé sans illumination continue des échantillons biologiques mis en œuvre i.e. des échantillons biologiques soumis ou non à la condition à tester.

Ainsi, dans ce 3^{e} mode de réalisation, la présente invention concerne un procédé pour déterminer l'influence d'une condition sur un échantillon biologique comprenant les étapes consistant à :
a') diviser ledit échantillon biologique en deux parties identiques A et B ;
b') soumettre ladite partie A à ladite condition ;
c') mettre une solution comprenant au moins un composé fluorescent en contact avec les parties A et B dudit échantillon biologique ;
d') mesurer, pour chaque partie d'échantillon, la fluorescence émise par ledit composé fluorescent à un temps T choisi parmi les temps de la phase de latence du profil biphasique obtenu pour un échantillon biologique de même nature que l'échantillon biologique de ladite étape (a') mis en contact avec le même composé fluorescent que celui de ladite étape (c') en absence de toute condition pouvant affecter le profil cinétique de fluorescence,
e') comparer les valeurs obtenues à l'étape (d') pour la partie A et la partie B dudit échantillon biologique,

l'excitation au temps T étant la seule excitation à laquelle le composé fluorescent est soumis durant le procédé selon l'invention et présentant une durée inférieure à 1 seconde, notamment inférieure à 900 ms, en particulier, inférieure à 800 ms et, tout particulièrement, inférieure à 700 ms.

Tout ce qui a précédemment été décrit pour le procédé selon l'invention et notamment pour les étapes (a) et (b) du procédé selon l'invention s'applique *mutatis mutandis* aux étapes (a') à (d') de cette variante.

Le fait de mettre en œuvre deux parties identiques d'un même échantillon initial permet de s'affranchir de problèmes liés à la taille de l'échantillon biologique. En effet, des parties identiques d'un même échantillon contiennent, notamment dans le cas où l'échantillon biologique est une culture cellulaire adhérente ou en suspension, un même nombre de cellules cultivées dans les mêmes conditions. Cette propriété permet, dans le cadre de ce 3^{e} mode de réalisation, d'obtenir un résultat sur la base d'une seule mesure de fluorescence à un temps T.

Le temps T auquel la mesure de la fluorescence est effectuée peut être n'importe quel temps inclus dans la phase de latence telle que précédemment définie. Avantageusement, ledit temps T est supérieur à (t₀ + 0,5 secondes), notamment supérieur à (t₀ + 10 secondes) et, en particulier, supérieur à (t₀ + 1 min) avec t₀ représentant le temps auquel le composé fluorescent est mis en contact avec les parties A et B de l'échantillon biologique.

La comparaison lors de l'étape (e') peut être effectuée sur la base du rapport (IF_{A}/IF_{B}) avec IF_{A} représentant la valeur de fluorescence obtenue à l'instant T pour la partie A de l'échantillon (i.e. la partie de l'échantillon ayant été soumis à la condition) et IF_{B} représentant la valeur de fluorescence obtenue à l'instant T pour la partie B de l'échantillon (i.e. la partie de l'échantillon servant de contrôle). Si le rapport (IF_{A}/IF_{B}) est inférieur à 2, notamment de l'ordre de 1 (i.e. 1 ± 0,5, notamment 1 ± 0,2 et, en particulier, 1 ± 0,1), la condition testée n'a aucune influence sur ledit échantillon biologique. Au contraire, si le rapport (IF_{A}/IF_{B}) est supérieur à 3, notamment supérieur à 4 et, en particulier, supérieur à 6, la condition testée affecte ledit échantillon et voire est cytotoxique si ledit échantillon est une cellule ou une culture cellulaire.

La présente invention comprend de nombreuses applications notamment dans le cadre du criblage de composés à intérêt pharmaceutique. Par conséquent, la présente invention concerne également un procédé pour identifier un composé capable de moduler un processus biologique comprenant une étape de mise en œuvre d'un procédé tel que précédemment défini, ledit composé à tester étant la condition à laquelle l'échantillon biologique est soumis.

Par « composé capable de moduler un processus biologique », on entend, dans le cadre de la présente invention, un agent capable d'inhiber, d'activer, d'accélérer ou de ralentir ledit processus biologique. A titre d'exemples non limitatifs de processus biologiques qui peuvent être étudiés dans le cadre de la présente invention, on peut citer la mort cellulaire par processus génotoxique, cytotoxique, apoptotique ou nécrotique, et la division cellulaire.

Le terme « composé » tel qu'utilisé dans la présente invention fait référence à une molécule de n'importe quel type comprenant un composé chimique ou un mélange de composés chimiques, une séquence peptidique, une séquence nucléotidique comme une séquence antisens, une macromolécule biologique ou un extrait d'un matériel biologique issu d'algues, de bactéries, de cellules ou de tissus d'animaux en particulier de mammifères, de plantes ou de champignons. Ledit composé peut donc être un composé naturel ou un composé synthétique notamment obtenu par chimie combinatoire. Le terme « composé » s'applique également aux agents physiques tels que la température, la pression et les rayonnements ionisants.

La présente invention trouve également une application dans le contrôle qualité. En effet, cette dernière peut être mise en œuvre afin de détecter la présence d'un composé capable de moduler un processus biologique dans un prélèvement. Ainsi, la présente invention concerne également un procédé pour détecter la présence d'un composé capable de moduler un processus biologique dans un prélèvement comprenant une étape de mise en œuvre d'un procédé tel que précédemment défini, ledit prélèvement étant la condition à laquelle l'échantillon biologique est soumis.

Dans cette application, le composé susceptible d'être présent dans ledit prélèvement est tel que précédemment défini. Il peut s'agir d'une toxine ou d'un mélange de toxines. Le prélèvement peut être tout échantillon susceptible de subir un contrôle qualité et notamment une matière première naturelle ou synthétique, un produit naturel, un produit pharmaceutique, un produit manufacturé, un produit alimentaire, etc....

De plus, le profil de référence tel que précédemment décrit peut être obtenu à partir :
- d'un contrôle exempt de composé capable de moduler un processus biologique tel qu'un échantillon E contrôle ne comprenant aucun composé capable de moduler un processus biologique, ou
- d'un contrôle contenant une quantité connue d'un composé ou d'un mélange de composés capable(s) de moduler un processus biologique.

Cette application dans le contrôle qualité trouve un intérêt particulier dans la détection d'au moins une toxine marine ou un mélange de toxines marines, ladite toxine marine ou ledit mélange étant le composé capable de moduler un processus biologique selon la présente invention. Par « toxine marine », on entend également une phycotoxine et notamment une toxine choisie parmi l'acide domoïque, l'acide okadaïque, les azaspiracides, les ciguatoxines, la gambiertoxine, la gymnodimine, les maïtotoxines, la palytoxine, les pectenotoxines, les spirolides et leurs mélanges. Dans ce cas, l'échantillon E mis en œuvre peut être un extrait de mollusques tels que huîtres, moules, palourdes, coques, coquilles Saint-Jacques, pectinidés, ormeaux et leurs mélanges. Par « extrait de mollusques », on entend dans le cadre de la présente invention un extrait obtenu par broyage de mollusques entiers (i.e. avec coquille), un extrait obtenu par broyage du corps de mollusques ou un extrait obtenu par broyage de parties particulières du corps de mollusques telles que la partie digestive ou la fraction grasse de la partie digestive. Cet extrait peut éventuellement subir d'autres traitements, avant d'être mis au contact de l'échantillon biologique, tels qu'une centrifugation, une solubilisation, etc...

L'invention sera mieux comprise à la lecture des figures et exemples qui suivent. Ceux-ci n'ont pas pour but de limiter l'invention dans ses applications, il ne s'agit que d'illustrer ici les possibilités offertes par le procédé de l'invention.

### BRÈVE DESCRIPTION DES DESSINS

La Figure 1 présente le profil cinétique des intensités de fluorescence de cellules HACAT préalablement traitées pendant 4 h avec 5 mM de chlorure de mercure (O) ou avec la solution témoin (●), puis ensuite marquées avec une solution de thiazole orange à 16 µM seul (Figure 1A) ou associé à 20 mM d'H₂O₂ (Figure 1B), 20 µM de triton (Figure 1C) ou 0,85 M d'éthanol (Figure 1D). Les intensités de fluorescence sont ensuite mesurées toutes les minutes pendant 60 min et chaque valeur représentée correspond à la moyenne des intensités de 2 à 4 puits indépendants pour la même situation expérimentale.

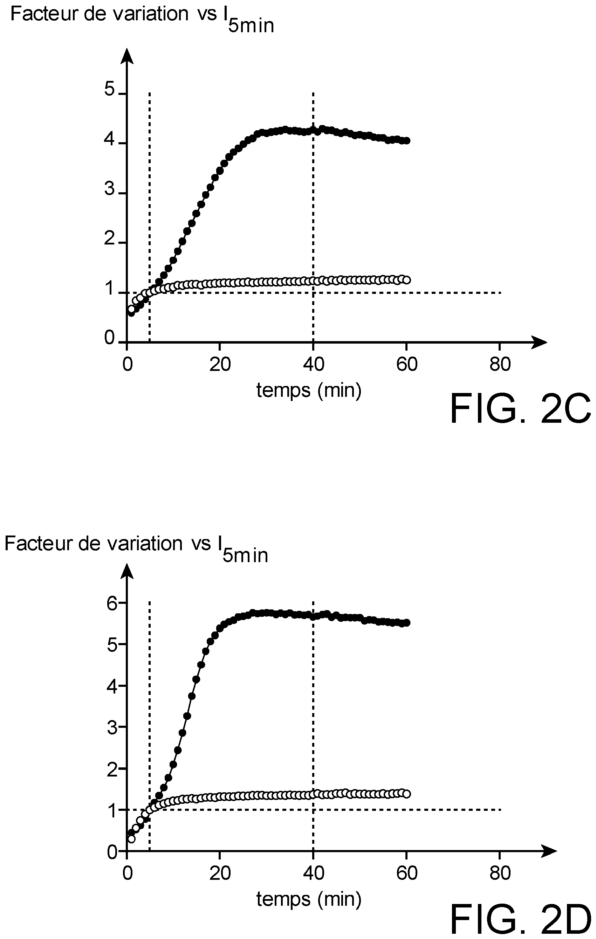

La Figure 2 présente le profil cinétique des intensités exprimées par rapport à la mesure de fluorescence effectuée 5 min après dépôt de la solution de thiazole orange (facteur de variation) et ce, pour des cellules HACAT préalablement traitées pendant 4 h avec 5 mM de chlorure de mercure (O) ou avec la solution témoin (●), puis ensuite marquées avec une solution de thiazole orange à 16 µM seul (Figure 2A) ou associé à 20 mM d'H₂O₂ (Figure 2B), 20 µM de triton (Figure 2C) ou 0,85 M d'éthanol (Figure 2D).
La Figure 3 présente les valeurs d'intensité de fluorescence mesurées sur 2 puits indépendants des cellules NCTC préalablement traitées pendant 4 h avec 5 mM de chlorure de mercure (O) ou avec la solution témoin (●), puis ensuite marquées avec une solution de thiazole orange à 32 µM seul. L'intensité de fluorescence est ensuite mesurée toutes les 15 secondes pendant 60 min. La Figure 3A présente les valeurs d'intensité brutes et la Figure 3B les valeurs d'intensité exprimées par rapport à la mesure de fluorescence effectuée 5 min post-traitement avec la solution de thiazole orange.

### EXPOSÉ DÉTAILLÉ DE MODES DE RÉALISATION PARTICULIERS

### I. Protocole

### 1-1. Ensemencement des cellules

Des cellules HACAT ont été ensemencées à 20000 cellules par puits dans une plaque 96 puits noire à fond transparent puis cultivées 48 h dans du milieu de culture complété avec 10% sérum de veau fœtal (SVF). Le jour du test, le milieu de culture est remplacé par 80 µl de milieu de culture sans SVF.

### 1-2. Traitement des cellules avec l'agent cytotoxique

Afin d'induire une situation de mort cellulaire (cytotoxicité), les cellules sont traitées 4h avant l'expérience par ajout de 20 µl d'une solution de 25 mM de chlorure de mercure (HgCl₂) dans les 80 µl de milieu (soit 5 mM final). Ce traitement permet d'induire une mort cellulaire totale.

Les cellules témoins sont traitées avec 20 µl de milieu de culture sans agents cytotoxique.

### I-3. Préparation des solutions

Le marqueur fluorescent utilisé est le **thiazole orange** (TO).

La solution de TO est utilisée soit sans additif, soit associée à un autre composé. Les composés ajoutés sont le **peroxyde d'hydrogène** (H₂O₂), **le triton** et **l'éthanol.** L'ensemble des solutions sont préparées dans du milieu de culture sans SVF.

Les solutions des différents composés sont préparées 6 fois concentrées (6X). Leurs concentrations sont données dans le Tableau 1 ci-après :

**Tableau 1**

| | **TO (6X)** | **H₂O₂ (6X)** | **Triton (6X** | **Ethanol (6X)** |
|---|---|---|---|---|
| **Solution 1** | 80 µM | - | - | - |
| **Solution 2** | 80 µM | 100 mM | - | - |
| **Solution 3** | 80 µM | - | 100 µM | - |
| **Solution 4** | 80 µM | - | - | 3,4 M |

### I-4. Traitement des cellules avec les solutions 1 à 4

Les cellules témoins et prétraitées avec l'HgCl₂ sont traitées par dépôt de 20 µl des solutions 1 à 4 dans 100 µl (80 µl de milieu +20 µl de solution d' HgCl₂ ou 20 µl de milieu sans HgCl₂). Le facteur de dilution des solutions étant de 6, les concentrations finales (1X) des différents composés sont données dans le Tableau 2 ci-après :

**Tableau 2**

| | **TO (1X)** | **H₂O₂ (1X)** | **Triton (1X)** | **Ethanol (1X)** |
|---|---|---|---|---|
| **Solution 1** | 16 µM | - | - | - |
| **Solution 2** | 16 µM | 20 mM | - | - |
| **Solution 3** | 16 µM | - | 20 µM | - |
| **Solution 4** | 16 µM | - | - | 0,85 M |

### I-5. Enregistrement de la fluorescence

Immédiatement après dépôt des solutions 1 à 4, la fluorescence est lue dans chaque puits à raison d'une lecture toutes les minutes pendant 60 min avec les paramètres suivants :
*Longueur d'onde d'excitation (λₑₓ) : **505 nm***
*Longueur d'onde d'émission (λₑₓ) : **535 nm***

### II. Résultats

Les intensités de fluorescence mesurées sont représentées en fonction du temps post-traitement avec les solutions 1 à 4. Afin de caractériser des différences dans les profils cinétiques, les constantes de temps [*t*_{*1*/*2*}] sont calculées. La constante de temps [*t*_{*1*/*2*}] représente, pour une condition expérimentale donnée, le temps nécessaire à la fluorescence pour atteindre 50% de sa valeur maximale. Il s'agit d'un indicateur d'efficacité temporelle d'une condition donnée.

### II-1. Traitement des cellules avec les solutions de thiazole orange seul ou associé à l'H₂O₂, le triton ou l'éthanol

Lorsque les cellules témoins (●) sont traitées avec la solution 1 (TO seul à 16 µM), on observe une phase de latence du signal fluorescent après le dépôt (Figure 1A). Cette phase de latence est suivie d'une phase d'augmentation importante de la fluorescence qui se stabilise environ 40 min après traitement des cellules. La constante de temps calculée pour cette phase d'augmentation de fluorescence est de **26,1 min** (Tableau 3).

Lorsque les cellules préalablement soumises à un composé cytotoxique (o) sont traitées avec la solution de TO seul, on observe une augmentation rapide de la fluorescence dans les premières minutes qui se stabilise ensuite environ 10 min après dépôt de la solution. La constante de temps de cette phase d'augmentation est de **3,6 min** (Tableau 3).

Lorsque les cellules témoins sont traitées avec une solution de TO à 16 µM associée à 20 mM d'H₂O₂ (Figure 1B), 20 µM de Triton (Figure 1C) ou 0,85 M d'éthanol (Figure 1D), on observe un profil cinétique comparable à celui observé lorsque les cellules sont traitées avec une solution de TO seul. Cependant la phase de latence est significativement raccourcie lorsque les cellules sont traitées avec une solution de TO associée à un composé chimique. En effet, les constantes de temps de la phase d'augmentation de fluorescence des cellules traitées avec une solution de TO associée à l'H₂O₂, le triton et l'éthanol sont respectivement de **14,7 ; 14,3 et 12,5 min** (Tableau 3).

Aucune différence dans la nature du profil cinétique n'est observée lorsque les cellules préalablement traitées avec le composé cytotoxique sont marquées avec les différents mélanges par rapport au marquage avec la solution de TO seul (Figures 1B, 1C et 1D). La constante de temps est légèrement raccourcie dans le cas des mélanges TO/Triton et TO/éthanol **(1,0 et 2,5 min** respectivement) et reste inchangée dans le cas du mélange TO/H₂O₂ (**3,7 min ;** Tableau 3).

**Tableau 3 : Constantes de temps [t_{1/2}] des phases d'augmentation de la fluorescence mesurées sur les cellules témoins et préalablement traitées avec 5 mM d'HgCl₂. Pour les cellules témoins les constantes de temps ont été calculées avec le modèle de régression suivant : y=RFUₘᵢₙ + (RFUₘₐₓ-RFUₘᵢₙ)/(1+10^((Log t_{1/}₂-x)^{∗}HillSlope. Pour les cellules prétraitées avec l'HgCl₂ les constantes de temps ont été calculées avec le modèle de régression suivant : y=RFUₘₐₓ×[x/(t_{1/}₂+x)] + ax.**

| | **Cellules témoins** | **Cellules prétraitées HgCl₂** | ***Δ*** |
|---|---|---|---|
| **TO seul** | 26,1 | 3,6 | 22,5 |
| **TO + 20 mM H₂O₂** | 14,7 | 3,7 | 11 |
| **TO + 20 µM Triton** | 14,3 | 1,0 | *13,3* |
| **TO + 0,85 M éthanol** | 12,5 | 2,5 | 10 |

### II-2. Caractérisation des deux états de viabilité cellulaire

Les données brutes illustrées précédemment montrent que le traitement des cellules témoins et prétraitées avec 5 mM d'HgCl₂ permet d'obtenir des profils cinétiques d'intensité de fluorescence distincts.

Chronologiquement, le traitement avec la solution de TO associé ou non à un composé chimique, induit d'abord une augmentation de l'intensité du signal fluorescent sur les cellules soumises à un agent cytotoxique, alors que cette augmentation de l'intensité est plus tardive sur les cellules témoins.

Il est possible de caractériser les deux états de cytotoxicité en exploitant ces profils cinétiques variables. Il suffit pour cela de quantifier, dans un intervalle de temps adéquat, la variation de l'intensité du signal fluorescent dans chacune des conditions expérimentales. Les profils chronologiquement distincts obtenus montrent effectivement qu'il existe un intervalle de temps pendant lequel l'intensité de fluorescence des cellules témoins augmente très significativement alors que l'intensité du signal mesuré sur des cellules traitées avec l'agent cytotoxique varie beaucoup moins.

De façon arbitraire, l'intervalle de temps 5-40 min post-traitement avec les différentes solutions a été choisi pour caractériser les deux états de cytotoxicité. Les données obtenues précédemment ont donc été exprimées en facteur de variation par rapport à la mesure réalisée 5 min post-traitement (Figure 2).

Les données obtenues à 40 min post-traitement montrent une différence très significative du facteur de variation de l'intensité de fluorescence entre les cellules témoins et les cellules soumises à l'HgCl₂ (Tableau 4).

**Tableau 4 : Facteurs d'augmentation de la fluorescence. Les données illustrées représentent les facteurs de variations de la fluorescence entre les mesures effectuées à 5 et 40 min post-traitement avec les différentes solutions de TO associé ou non à l'H₂O₂, le triton ou l'éthanol.**

| | **Cellules témoins** | **Cellules prétraitées HgCl₂** |
|---|---|---|
| **TO seul** | 8,1 | 1,2 |
| **TO + 20mM H₂O₂** | 4,2 | 1,3 |
| **TO + 20µM Triton** | 4,3 | 1,2 |
| **TO + 0.85M éthanol** | 5,7 | 1,4 |

### III. Extension à d'autres modèles cellulaires

Les données illustrées précédemment ont été obtenues sur des cellules HACAT. Des résultats comparables ont été obtenus sur des cellules NCTC traitées avec une solution de thiazole orange à 32 µM. Les enregistrements cinétiques sont illustrés dans la Figure 3A. Les résultats révèlent comme pour les HACAT, un profil distinct des cinétiques de fluorescence entre les cellules témoins et les cellules soumises à 5 mM d'HgCl₂ pendant 4 h.

Lorsque les données sont exprimées en facteur de variation par rapport à la mesure réalisée 5 min post-traitement avec la solution de TO, les résultats montrent une différence significative entre les deux situations de toxicité cellulaire (Figure 3B et Tableau 5).

**Tableau 5 : Facteurs d'augmentation de la fluorescence sur cellules NCTC. Les données illustrées représentent les facteurs de variations de la fluorescence entre les mesures effectuées à 5 et 40 min post-traitement avec les différentes une solution de TO à 32 µM.**

| | **Cellules témoins** | **Cellules prétraitées HgCl₂** |
|---|---|---|
| **TO seul à 32 µM** | 4,7 | 1,7 |

### IV. Commentaires/Conclusions

Le marquage de cellules témoins et soumises préalablement à un agent cytotoxique permet de générer des profils cinétiques distincts. Ces profils se caractérisent par une constante de temps d'augmentation de la fluorescence variable en fonction de la condition expérimentale.

Cette constante de temps étant significativement plus courte sur les cellules traitées avec un composé cytotoxique que sur les cellules témoins. Sur la base de ce constat, il est donc possible de caractériser les deux états de cytotoxicité en mesurant, dans un intervalle de temps approprié, le facteur de variation du signal fluorescent. Ce dernier est de plus grande amplitude sur des cellules témoins que sur des cellules traitées avec le composé cytotoxique.

En conclusion, l'expérience montre qu'il est possible de distinguer un état de toxicité cellulaire d'un état de non toxicité par marquage des cellules avec une solution de thiazole orange en mesurant, dans un intervalle de temps approprié, le facteur de variation de l'intensité de fluorescence.

L'expérience montre également que l'effet observé lorsque le TO est utilisé seul peut-être accéléré par ajout de différents composés chimiques de nature variable (agent oxydant, détergent, solvant organique).

## Revendications

1. Procédé pour déterminer l'influence d'une condition sur un échantillon biologique comprenant les étapes consistant à :
a') diviser ledit échantillon biologique en deux parties identiques A et B ;
b') soumettre ladite partie A à ladite condition ;
c') mettre une solution comprenant au moins un composé fluorescent en contact avec les parties A et B dudit échantillon biologique ;
d') mesurer, pour chaque partie d'échantillon, la fluorescence émise par ledit composé fluorescent à un temps T choisi parmi les temps de la phase de latence du profil biphasique obtenu pour un échantillon biologique de même nature que l'échantillon biologique de ladite étape (a') mis en contact avec le même composé fluorescent que celui de ladite étape (c') en absence de toute condition pouvant affecter le profil cinétique de fluorescence,
e') comparer les valeurs obtenues à l'étape (d') pour la partie A et la partie B dudit échantillon biologique, **caractérisé en ce que**
l'excitation au temps est la seule excitation à laquelle le composé fluorescent est soumis durant ledit procédé et présente une durée inférieure à 1 seconde.

2. Procédé pour déterminer l'influence d'une condition sur un échantillon biologique comprenant les étapes consistant à :
a₁) mettre ledit échantillon préalablement soumis à ladite condition en contact avec une solution comprenant au moins un composé fluorescent ;
b₁) établir le profil cinétique de la fluorescence émise par ledit composé fluorescent en mesurant la fluorescence émise par ledit composé fluorescent à une pluralité de temps distincts, suite à ladite étape (a₁), **caractérisé en ce que**
l'excitation dudit composé fluorescent pour chaque temps de la pluralité de temps distincts durant ledit procédé présente une durée inférieure à 1 seconde,
moyennant quoi
- si le profil cinétique obtenu à l'étape (b₁) est un profil biphasique de type sigmoïdal, ladite condition n'influence pas ledit échantillon biologique ou
- si le profil cinétique obtenu à l'étape (b₁) est un profil monophasique de type hyperbolique, ladite condition influence ledit échantillon biologique.

3. Procédé pour déterminer l'influence d'une condition sur un échantillon biologique comprenant les étapes consistant à :
a₂) mettre ledit échantillon préalablement soumis à ladite condition en contact avec une solution comprenant au moins un composé fluorescent, un profil cinétique biphasique de référence de la fluorescence émise mesurée pour un même échantillon biologique mis en contact avec le même composé fluorescent mais en absence de ladite condition ayant été préalablement établi ; **caractérisé en ce que** le procédé comprend en outre les étapes consistant à:
b₂) mesurer la fluorescence émise par ledit composé fluorescent à deux temps distincts, t₁ et t₂ suite à ladite étape (a₂),
le temps t₁ étant choisi parmi les temps appartenant à la phase de latence de la fluorescence du profil cinétique biphasique de référence et le temps t₂ étant choisi parmi les temps appartenant à la phase de stabilisation de la fluorescence du profil cinétique biphasique de référence,
l'excitation dudit composé fluorescent au temps t₁ et l'excitation dudit composé fluorescent au temps t₂ durant ledit procédé présentant une durée inférieure à 1 seconde, et
c) comparer la fluorescence émise aux temps t₁ et t₂.

4. Procédé selon l'une quelconque des revendications 1 à 3, **caractérisé en ce que** ledit échantillon biologique est choisi dans le groupe constitué par une cellule, plusieurs cellules, une partie de cellule, une préparation cellulaire, des acides nucléiques isolés et leurs mélanges.

5. Procédé selon l'une quelconque des revendications 1 à 4, **caractérisé en ce que** ladite condition est choisie parmi les conditions physiques, les conditions chimiques et les conditions biologiques.

6. Procédé selon l'une quelconque des revendications précédentes, **caractérisé en ce que** ledit composé fluorescent est un composé fluorescent capable de se lier aux acides nucléiques.

7. Procédé selon l'une quelconque des revendications précédentes, **caractérisé en ce que** ledit composé fluorescent est choisi parmi les intercalants fluorescents, les colorants liant les bases A:T ou les bases G:C et les cyanines perméantes ou imperméantes.

8. Procédé selon l'une quelconque des revendications précédentes, **caractérisé en ce que** ladite solution contenant ledit composé fluorescent comprend en outre au moins un composé affectant l'intégrité de l'échantillon.

9. Procédé selon la revendication 8, **caractérisé en ce que** ledit composé affectant l'intégrité de l'échantillon est choisi parmi les composés génotoxiques ; les composés cytotoxiques; les composés apoptotiques; les composés nécrotiques; les composés oxydants ; les tensioactifs ; les agents dénaturants et les agents physiques.

## Patentansprüche

1. Verfahren zum Ermitteln des Einflusses einer Bedingung auf eine biologische Probe, das die folgenden Schritte umfasst:
a') Aufteilen der biologischen Probe in zwei identische Teile A und B;
b') Aussetzen des Teils A der genannten Bedingung;
c') Inkontaktbringen einer Lösung, die mindestens eine fluoreszierende Verbindung enthält, mit den Teilen A und B der biologischen Probe;
d') Messen der von der fluoreszierenden Verbindung emittierten Fluoreszenz für jeden Probenteil zu einem Zeitpunkt T, der aus den Zeiten der Latenzphase des zweiphasigen Profils ausgewählt wird, das für eine biologische Probe der gleichen Art wie die biologische Probe in Schritt (a') erhalten wird, die mit der gleichen fluoreszierenden Verbindung wie in Schritt (c') in Kontakt gebracht wird, jedoch unter Abwesenheit jeglicher Bedingungen, die das kinetische Profil der Fluoreszenz beeinflussen können,
e') Vergleichen der in Schritt (d') erhaltenen Werte für Teil A und Teil B der genannten biologischen Probe,
**dadurch gekennzeichnet, dass**
die Anregung zum Zeitpunkt T die einzige Anregung ist, der die fluoreszierende Verbindung während des Verfahrens ausgesetzt wird, und eine Dauer von weniger als 1 Sekunde hat.

2. Verfahren zum Ermitteln des Einflusses einer Bedingung auf eine biologische Probe, das die folgenden Schritte umfasst:
a₁) Inkontaktbringen der Probe, die zuvor der genannten Bedingung ausgesetzt wurde, mit einer Lösung, die mindestens eine fluoreszierende Verbindung enthält;
b₁) Erstellen des kinetischen Profils der von der fluoreszierenden Verbindung emittierten Fluoreszenz durch Messen der von der fluoreszierenden Verbindung emittierten Fluoreszenz zu mehreren verschiedenen Zeitpunkten nach dem Schritt (a₁),
**dadurch gekennzeichnet, dass**
die Anregung der fluoreszierenden Verbindung bei jedem Zeitpunkt der mehreren verschiedenen Zeitpunkten während des Verfahrens eine Dauer von weniger als 1 Sekunde hat,
wodurch dann,
- wenn das in Schritt (b₁) erhaltene kinetische Profil ein zweiphasiges sigmoidales Profil ist, die Bedingung keinen Einfluss auf die biologische Probe hat, oder
- wenn das in Schritt (b₁) erhaltene kinetische Profil ein einphasiges hyperbolisches Profil ist, die Bedingung einen Einfluss auf die biologische Probe hat.

3. Verfahren zum Ermitteln des Einflusses einer Bedingung auf eine biologische Probe, das die folgenden Schritte umfasst:
a₂) Inkontaktbringen der zuvor der genannten Bedingung ausgesetzten Probe mit einer Lösung, die mindestens eine fluoreszierende Verbindung enthält, wobei zuvor ein kinetisches zweiphasiges Referenzprofil der emittierten Fluoreszenz erstellt wurde, gemessen für die gleiche biologische Probe, die mit der gleichen fluoreszierenden Verbindung in Kontakt gebracht wurde, jedoch unter Abwesenheit der genannten Bedingung;
**dadurch gekennzeichnet, dass** das Verfahren ferner die folgenden Schritte umfasst:
b₂) Messen der von der fluoreszierenden Verbindung emittierten Fluoreszenz zu zwei verschiedenen Zeitpunkten t₁ und t₂ nach dem Schritt (a₂),
wobei der Zeitpunkt t₁ aus Zeitpunkten ausgewählt ist, die zu der Latenzphase der Fluoreszenz des kinetischen zweiphasigen Referenzprofils gehören, und
wobei der Zeitpunkt t₂ aus Zeitpunkten ausgewählt ist, die zu der Stabilisierungsphase der Fluoreszenz des kinetischen zweiphasigen Referenzprofils gehören,
wobei die Anregung der fluoreszierenden Verbindung zum Zeitpunkt t₁ und die Anregung der fluoreszierenden Verbindung zum Zeitpunkt t₂ während des Verfahrens eine Dauer von weniger als 1 Sekunde haben, und
c) Vergleichen der zu den Zeitpunkten t₁ und t₂ emittierten Fluoreszenz.

4. Verfahren nach einem der Ansprüche 1 bis 3,
**dadurch gekennzeichnet, dass** die biologische Probe ausgewählt ist aus der Gruppe bestehend aus einer Zelle, einer Vielzahl von Zellen, einem Zellteil, einem Zellpräparat, isolierten Nukleinsäuren und deren Gemischen.

5. Verfahren nach einem der Ansprüche 1 bis 4,
**dadurch gekennzeichnet, dass** die Bedingung ausgewählt ist aus physikalischen Bedingungen, chemischen Bedingungen und biologischen Bedingungen.

6. Verfahren nach einem der vorhergehenden Ansprüche,
**dadurch gekennzeichnet, dass** die fluoreszierende Verbindung eine fluoreszierende Verbindung ist, die an Nukleinsäuren binden kann.

7. Verfahren nach einem der vorhergehenden Ansprüche,
**dadurch gekennzeichnet, dass** die fluoreszierende Verbindung ausgewählt ist aus fluoreszierenden Interkalationsmittel, die Basen A:T oder die Basen G:C bindenden Farbstoffen und permeanten oder impermeanten Cyaninen.

8. Verfahren nach einem der vorhergehenden Ansprüche,
**dadurch gekennzeichnet, dass** die Lösung, die die fluoreszierende Verbindung enthält, weiterhin mindestens eine Verbindung enthält, die die Integrität der Probe beeinflusst.

9. Verfahren nach Anspruch 8,
**dadurch gekennzeichnet, dass** die Verbindung, die die Integrität der Probe beeinflusst, ausgewählt ist aus genotoxischen Verbindungen; zytotoxischen Verbindungen; apoptotischen Verbindungen; nekrotischen Verbindungen; oxidierenden Verbindungen; Tensiden; Denaturierungsmitteln und physikalischen Mitteln.

## Claims

1. A method for determining the influence of a condition on a biological sample comprising the steps of:
a') dividing said biological sample into two identical parts A and B;
b') subjecting said part A to said condition;
c') contacting a solution comprising at least one fluorescent compound with parts A and B of said biological sample;
d') measuring, for each sample part, the fluorescence emitted by said fluorescent compound at a time T selected from the times of the lag phase of the two-phase profile obtained for a biological sample of the same nature as the biological sample of said step (a') contacted with the same fluorescent compound as that of said step (c') in the absence of any condition likely to affect the fluorescence kinetic profile,
e') comparing the values obtained in step (d') for part A and part B of said biological sample, **characterised in that**
the excitation at time T is the only excitation to which the fluorescent compound is subjected during said method and has a duration lower than 1 second.

2. A method for determining the influence of a condition on a biological sample comprising the steps of:
a₁) contacting said sample previously subjected to said condition with a solution comprising at least one fluorescent compound;
b₁) establishing the kinetic profile of the fluorescence emitted by said fluorescent compound by measuring the fluorescence emitted by said fluorescent compound at a plurality of distinct times, following said step (a₁), **characterised in that**
excitation of said fluorescent compound for each time of the plurality of distinct times during said method has a duration lower than 1 second,
whereby,
- if the kinetic profile obtained in step (b₁) is a sigmoidal type two-phase profile, said condition does not influence said biological sample or
- if the kinetic profile obtained in step (b₁) is a hyperbolic type one-phase profile, said condition influences said biological sample.

3. A method for determining the influence of a condition on a biological sample comprising the steps of:
a₂) contacting said sample previously subjected to said condition with a solution comprising at least one fluorescent compound, a reference two-phase kinetic profile of the emitted fluorescence measured for a same biological sample contacted with the same fluorescent compound that in the absence of said condition that has been previously established;
**characterised in that** the method further comprises the steps of:
b₂) measuring the fluorescence emitted by said fluorescent compound at two distinct times, t₁ and t₂ following step (a₂),
time t₁ being selected from times belonging to the fluorescence lag phase of the reference two-phase kinetic profile and time t₂ being selected from times belonging to the fluorescence stabilisation phase of the reference two-phase kinetic profile,
the excitation of said fluorescent compound at time t₁ and excitation of said fluorescent compound at time t₂ during said method having a duration lower than 1 second, and
c) comparing the fluorescence emitted at times t₁ and t₂.

4. The method according to any of claims 1 to 3, **characterised in that** said biological sample is selected from the group consisting of a cell, several cells, part of a cell, a cell preparation, isolated nucleic acids and mixtures thereof.

5. The method according to any of claims 1 to 4, **characterised in that** said condition is selected from physical conditions, chemical conditions and biological conditions.

6. The method according to any of the preceding claims, **characterised in that** said fluorescent compound is a fluorescent compound able to bind to nucleic acids.

7. The method according to any of the preceding claims, **characterised in that** said fluorescent compound is selected from fluorescent intercalators, stains binding bases A:T or bases G:C and permeating or impermeating cyanines.

8. The method according to any of the preceding claims, **characterised in that** said solution containing said fluorescent compound further comprises at least one compound affecting the integrity of the sample.

9. The method according to claim 8, **characterised in that** said compound affecting the integrity of the sample is selected from genotoxic compounds; cytotoxic compounds; apoptotic compounds; necrotic compounds; oxidising compounds; surfactants; denaturing agents and physical agents.
